Europäisches Patentamt

European Patent Office

Office européen des brevets

(11) Publication number: **0 289 119**
**A1**

(19)

## (12) EUROPEAN PATENT APPLICATION

(21) Application number: 88302019.0

(51) Int. Cl.⁴: **G05B 19/403**

(22) Date of filing: 09.03.88

(30) Priority: 29.04.87 GB 8710120

(43) Date of publication of application:
02.11.88 Bulletin 88/44

(84) Designated Contracting States:
AT BE CH DE ES FR GB GR IT LI LU NL SE

(71) Applicant: **WADKIN PUBLIC LIMITED COMPANY**
**Green Lane Works Green Lane Road**
**Leicester, LE5 4PF(GB)**

(72) Inventor: **Garness, Geoffrey Martin**
**110 Spencefield Lane**
**Evington Leicester LE5 6HF(GB)**

(74) Representative: **Serjeant, Andrew Charles et al**
**25 The Crescent King Street**
**Leicester, LE1 6RX(GB)**

(54) Rotary cutter setting methods and machines.

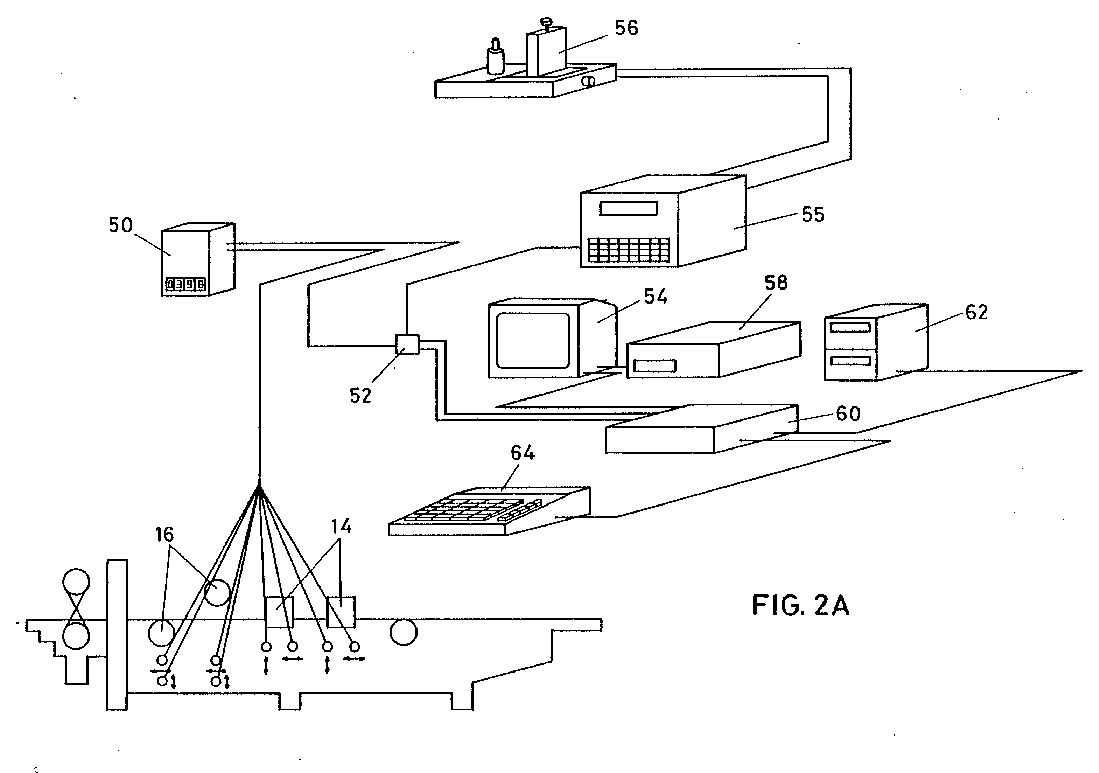

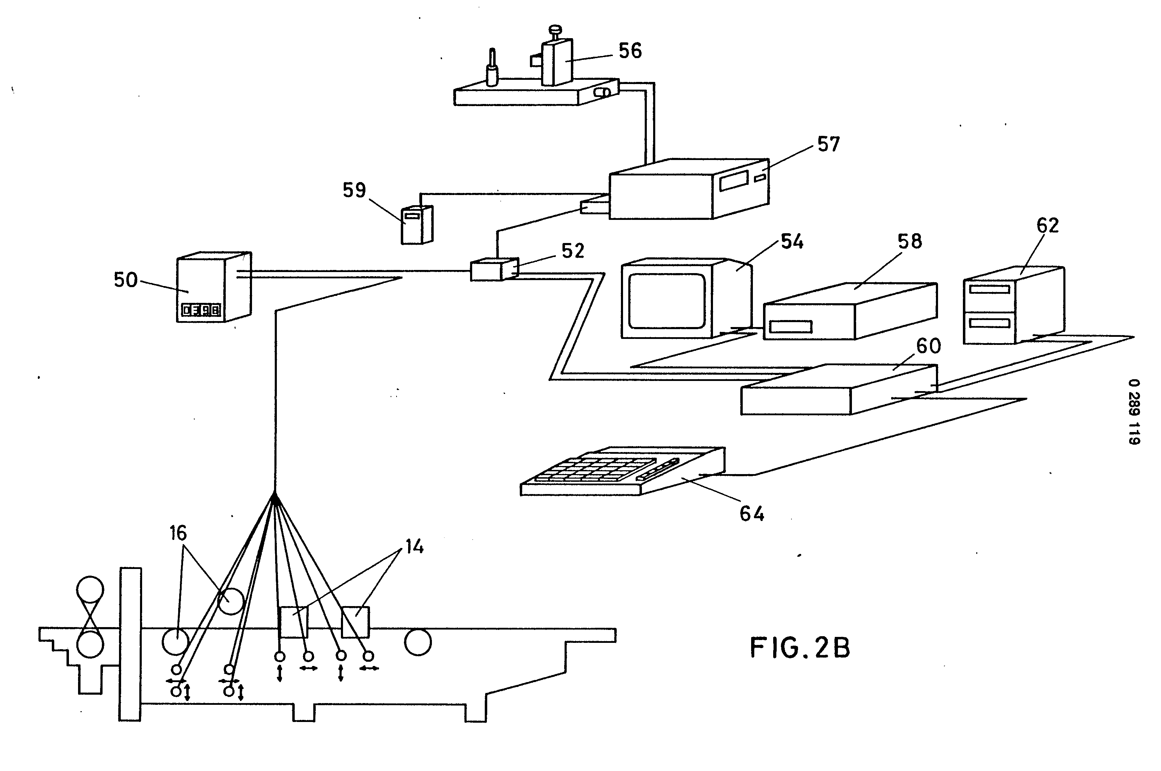

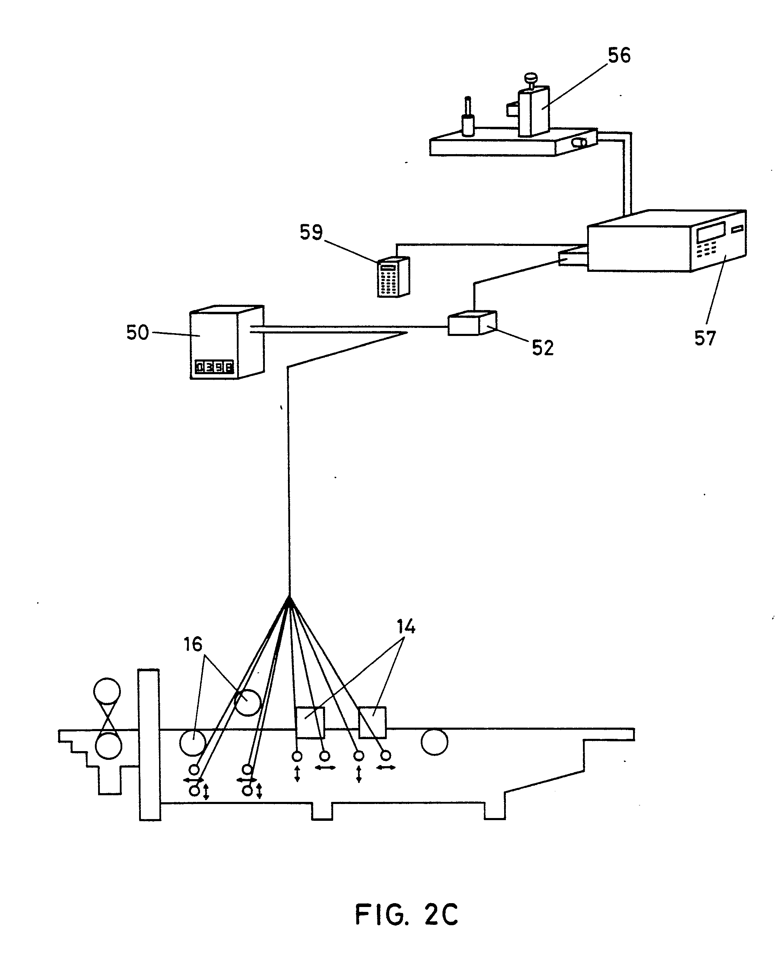

(57) In a machine for producing flat or profiled surfaces on wood, etc. the position of rotary cutters on spindles (14,16) is set automatically or semi-automatically. Lead screws (not in Fig. 2) are provided for setting the axial and radial location of each cutter in relation to a bed and a fence of the machine. A computer (60) has a memory (62) for storing relevant dimensions of individual cutters and of profiles to be produced. A keyboard (64) is for instructing the computer (60) as to the profile to be produced. A monitor (54) controlled by the computer (60) indicates the setting required in respect of each cutter and/or sets the location of cutter accordingly.

FIG. 2A

EP 0 289 119 A1

## Rotary Cutter Setting Methods and Machines

### Technical Field

The invention relates to the setting of the position of rotary cutters automatically and semi-automatically. Rotary cutters of the relevant kind are used in machines for producing flat or profiled surfaces on wood, plastics or composite materials. The invention is particularly but not exclusively concerned with smoothing, thicknessing, moulding, planing or tenoning machines for the production of components such as frame members for windows or doors.

### Background Art

Such machines may comprise a number of rotary cutters, each for treating a face of a workpiece as it is fed along a bed against a fence of the machine. The number of cutters is determined by the complexity of the profile desired and the amount of material (wood) to be removed. The cutters have to be ground to the shape of the profile, and after grinding they have to be set accurately in the machine as to both their radial and axial location. Cutters are not identical, yet they have to be set in such a way as to produce finished workpieces having identical predetermined profiles. In the past, cutters have been set by hand, but this is time-consuming and can be inaccurate.

### The invention

A machine according to the invention comprises a number of rotary cutters, means for setting the axial and radial location of each cutter in relation to a bed and a fence of the machine, a computer having a memory for storing relevant dimensions of individual cutters and of profiles to be produced, means for instructing the computer as to the profile to be produced, and means controlled by the computer for indicating the setting required in respect of each cutter and/or for setting the location of the cutter accordingly. In practice, all cutters are separately identified, often by a number stamped on at least one end of the cutter block. The relevant dimensions of each cutter are updated after regrinding. The computer will specify which cutter is required and the spindle at which it is to be located for the production of a given profile.

There may be a large display mounted on the machine at an ergonomically suitable position, or a smaller display adjacent each cutter mounting or adjacent each cutter adjustment shaft showing the setting and possibly also the identification of the cutter to be mounted. After the cutter has been mounted on the spindle, it may be set to the precise location indicated either manually or automatically by motors controlled by the computer. The adjustment screws for each spindle each carry a mechanical digital read-out counter which is calibrated to indicate the spindle position relative to the machine table and fence. A push button may be located adjacent each read-out. The computer may be programmed so that on pressing the button the appropriate setting and possibly also the cutter identification is displayed. The shafts may then be adjusted manually until the mechanical read-outs correspond with the computer controlled electronic display. Alternatively, a motor controlled by the computer may proceed directly to effect the necessary setting. The button may be equipped with a lamp and/or tactile indication or like means for indicating when it is active.

The computer may be fed directly with the dimensions of each cutter in coded form as the x and y coordinates of a particular corner or angle intersection of the blade profile after grinding. This may be done automatically either from measuring apparatus in the tool room or at a console on the machine. The computer may store a library of profiles which are required by a user.

The means for setting the cutters may comprise a lead screw for each of the axial and radial locations, a digital read-out as to each actual location, and a handle or square drive for rotating the screw. The invention includes a method of setting such a machine which comprises feeding the computer with an identification and dimensions of individual cutters, and with details of profiles to be produced, and setting the cutters at the locations indicated for each cutter mounting. There may be a push button adjacent each read-out for indicating that the corresponding cutter location has been set, and the location can readily be checked by comparison with the display.

### Drawings

Figure 1 is a front view of a planing and moulding machine according to the invention;

Figures 2A, B and C are each an overall layout of an alternative system for the machine of Figure 1;

Figure 3 is a perspective view of a mechanical digital read-out (MDRO) and push button of which several are used in the machine of Figure 1; and

Figure 4 is a typical section through a part of a cutter which might be used in the machine of Figure 1.

Best Mode

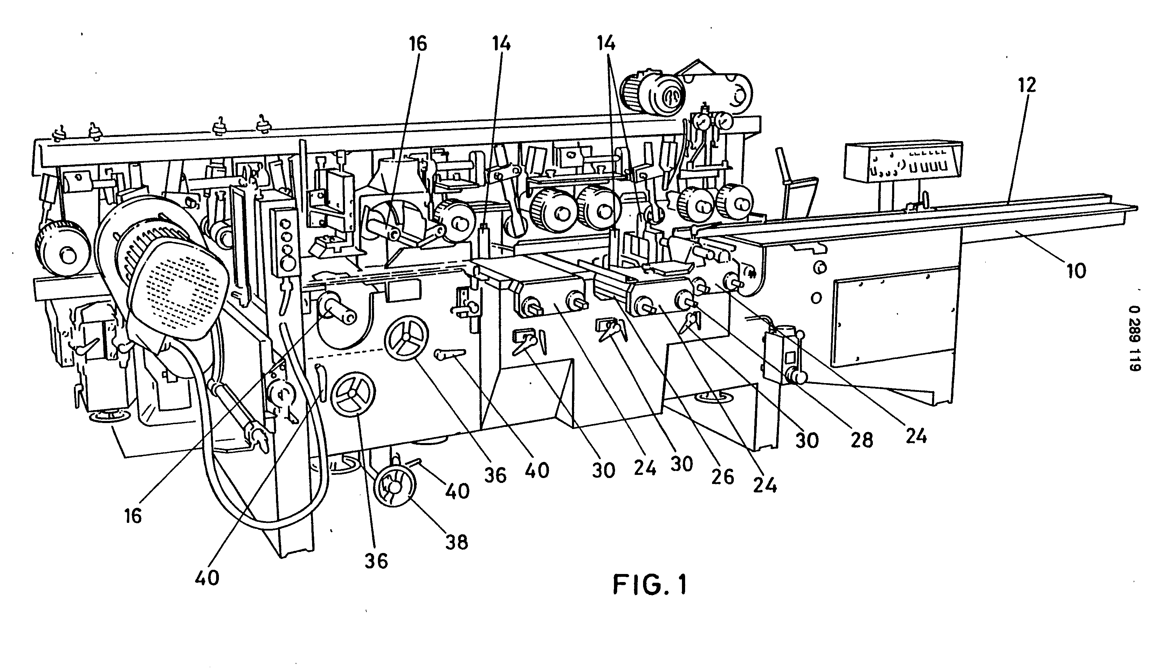

The machine shown in Figure 1 comprises a bed 10 and a fence 12 along which a workpiece can be fed. A number of vertical spindles 14 and horizontal spindles 16 can be seen. Rotary cutters can be secured to these spindles for planing or moulding the vertical or horizontal faces of a workpiece as it is fed through the machine. The vertical spindles 14 are mounted on carriages 24, and their vertical and horizontal location can be adjusted through lead screws 26, 28 which can be rotated either manually or by motors (not shown). After adjustment, the location of the spindles 14 can be locked through handles 30. The location of the horizontal spindles 16 can similarly be adjusted through hand wheels 36, 38 and locking handles 40.

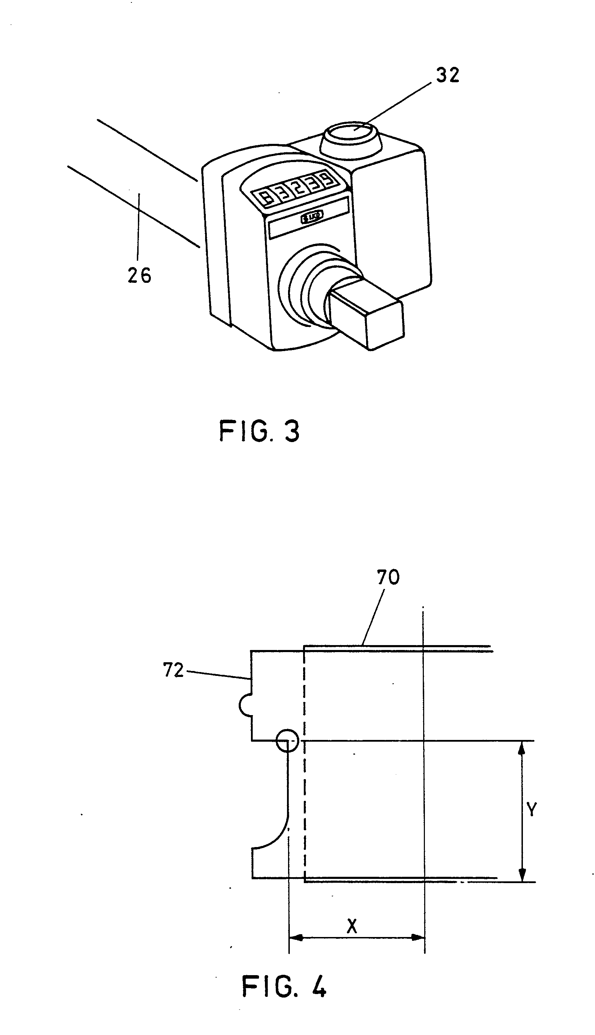

In the overall layouts of Figures 2A, B and C, the machine of Figure 1 is shown schematically with only the spindles 14,16 and read-outs as illustrated in Figure 3 being indicated. The read-outs and their associated push buttons appearing as Os are shown as each individually related to an LED display 50 indicating the setting required for the corresponding axial or radial location of the appropriate cutter. In Figure 2A, the display 50 is connected to a serial controller 52. A monitor screen 54 shows the shapes and dimensions of profiles and of cutters. The controller 52 is connected to a signal converter 55 and thence a cutter measuring stand 56 which may be located in the tool room. The monitor 54 is also connected to a video 58 so that the shapes of stored profiles and other data can be viewed. The serial controller 52 is connected to a personal computer 60 having a double disc drive memory 62 and a keyboard 64, and tells the display 50 which button has been pressed.

Figure 2B shows a simiar machine management system in which the cutter measuring stand 56 is computer-aided, comprising a printer/display unit 57 and a hand-held organizer 59. In the modification of Figure 2C, the input to the LED display 50 is direct from the computer aided setting stand 56,57.

Cutters such as that shown in Figure 4 comprise a central block 70 in which a number of profiled blades 72 are secured. After grinding to a precise shape, the effective diameter or radial location, and also the axial location of the cutter blades is determined by measuring to an angle or corner intersection such as that ringed in Figure 4. Each cutter block is individually marked so that the current dimensional status can be fed into the computer memory as required (e.g. immediately after re-grinding) and recalled as and when needed. Furthermore, the computer will know which cutterblocks to call up to produce a given section profile, and these may be identified on the monitor 54 and/or the separate display or displays 50 on the machine.

Read-outs such as that shown in Figure 3 are arranged to cooperate with each of the lead screws 26,28 and hand wheels 36,38 although not actually shown in Figure 1 in the interest of clarity. The read-out registers the actual distance of the axis of the spindle 14 or 16, and also of the spindle shoulder (locating the cutterblock), from the bed 10 or fence 12 of the machine. This distance is adjusted so as to agree with the figure shown on the corresponding LED display 50. Alternatively, in a fully computer controlled system, the lead screw (26) is automatically adjusted as to its location by a motor (not shown) which advances or retracts the screw a precise distance indicated by the computer 60 for setting the location of the cutter. A push button 32 shown adjacent the read-out in Figure 3 is for calling up the relevant information from the computer 60 onto the LED display 50.

**Claims**

1. A machine for producing flat or profiled surfaces by means of rotary cutters, which machine comprises means (26,28) for setting the axial and radial location of each cutter in relation to a bed (10) and a fence (12) of the machine, characterized by a computer (60) having a memory (62) for storing relevant dimensions of individual cutters and of profiles to be produced, means (64) for instructing the computer (60) as to the profile to be produced, and means (54) controlled by the computer (60) for indicating the setting required in respect of each cutter and/or for setting the location of the cutter accordingly.

2. A machine according to claim 1 including a large display (54) mounted on the machine at an ergonomically suitable position for showing the setting and possibly also the identification of the cutter to be mounted.

3. A machine according to claim 1 including a smaller display (54) adjacent each cutter mounting or adjacent each cutter adjustment shaft for showing the setting and possibly also the identification of the cutter to be mounted.

4. A machine according to any preceding claim in which adjustment screws (26,28) for each spindle (14,16) each carry a mechanical digital read-out counter calibrated to indicate the spindle position relative to the machine table and fence.

5. A machine according to claim 4 in which a push button (32) is located adjacent each read-out, and the computer (60) is programmed so that on pressing the button (32) the appropriate setting and possibly also the cutter identification is displayed.

6. A machine according to claim 5 in which the button (32) is equipped with a lamp and/or tactile indication or like means for indicating when it is active.

7. A machine according to any preceding claims including measuring apparatus (56) and means (55) whereby the computer (60) is fed directly with the dimensions of each cutter in coded form as the x and y coordinates of a particular corner or angle intersection of the blade profile after grinding.

8. A method of setting a machine for producing flat or profiled surfaces by means of rotary cutters, which method is characterized by feeding a computer (60) with an identification and dimensions of individual cutters, and with details of profiles to be produced, and setting the cutters at the locations indicated for each cutter mounting.

FIG. 1

0 289 119

FIG. 2A

0 289 119

FIG.2B

0 289 119

FIG. 2C

32

26

# FIG. 3

70

72

Y

X

# FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 912 731 (SUGIMOTO)<br>* Page 7, line 5 - page 8, line 7; page 8, lines 22-35; page 12, lines 6-26; page 20, lines 9-25; page 23, line 30 - page 24, line 9; page 34, lines 1-15 *<br>--- | 1,8 | G 05 B 19/403 |
| Y | US-A-3 646 418 (STERNS)<br>* Column 1, lines 25-54; column 3, lines 8-22; column 7, line 72 - column 8, line 7 *<br>--- | 1,8 | |
| Y | EP-A-0 185 829 (SICARD)<br>* Page 3, lines 14-40; page 19, line 34 - page 20, line 1; page 20, lines 30-35 *<br>--- | 1,8 | |
| X | US-A-3 488 479 (KEYES)<br>* Column 2, lines 51-56,63-66; column 3, lines 33-49; column 6, lines 49-53 * | 2 | |
| A | ---| 1,8 | |
| X | FR-A-2 384 293 (FUJITSU)<br>* Page 6, line 22 - page 7, line 2; page 7, lines 6-15,19-26; page 8, lines 24-29 *<br>--- | 7 | TECHNICAL FIELDS SEARCHED (Int. Cl.4)<br><br>G 05 B 19/00 |
| X | FR-A-2 546 789 (INOUE KIYOSHI)<br>* Page 2, lines 1-12; page 6, lines 1-4,15-23 *<br>----- | 2,6 | |

The present search report has been drawn up for all claims

| Place of search | Date of completion of the search | Examiner |
|---|---|---|
| THE HAGUE | 02-06-1988 | HAUSER L.E.R. |

EPO FORM 1503 03.82 (P0401)